# EUROPÄISCHE PATENTSCHRIFT

(11) **EP 2 291 239 B1**
(45) Veröffentlichungstag und Bekanntmachung des Hinweises auf die Patenterteilung: **21.06.2017**
(21) Anmeldenummer: 09745538.0
(22) Anmeldetag: 11.05.2009
(51) Int. Cl.: B01J 23/42

(54) **VERFAHREN ZUR HERSTELLUNG EINER PLATINKATALYSATOR-VORSTUFE**
METHOD FOR PRODUCING A PLATINUM CATALYST PRECURSOR
PROCÉDÉ DE PRÉPARATION D'UN PRÉCURSEUR DE CATALYSEUR A BASE DE PLATINE

(30) Priorität: 14.05.2008 DE 102008023472
(43) Veröffentlichungstag der Anmeldung: 09.03.2011
(73) Patentinhaber: Clariant Produkte (Deutschland) GmbH, 65929 Frankfurt am Main (DE)
(72) Erfinder: SCHWARZER, Hans-Christoph, 85635 Höhenkirchen-Siegertsbrunn (DE); TISSLER, Arno, 93105 Tegernheim (DE); HUTT, Markus, 80939 München (DE)
(74) Vertreter: Silber, Anton
(86) Internationale Anmeldenummer: PCT/EP2009/003333
(87) Internationale Veröffentlichungsnummer: WO 2009/138204

(56) Entgegenhaltungen:
- WO-A-94/06546
- WO-A-03/041846
- WO-A-2005/023398
- GB-A- 2 096 482
- US-A- 3 992 331
- US-A- 4 912 072
- US-A1- 2006 211 569
- REGALBUTO J R ET AL: "An evaluation of Pt sulfite acid (PSA) as precursor for supported Pt catalysts" TOPICS IN CATALYSIS, KLUWER ACADEMIC PUBLISHERS-PLENUM PUBLISHERS, NE, Bd. 39, Nr. 3-4, 1. Oktober 2006 (2006-10-01), Seiten 237-243, XP019454929 ISSN: 1572-9028

## Beschreibung

Die vorliegende Erfindung betrifft ein Verfahren insbesondere zur Herstellung einer Vorstufe eines geträgerten Platinkatalysators.

Geträgerte Edelmetallkatalysatoren, bei denen verhältnismäßig kleine Edelmetallpartikel auf der Oberfläche eines festen Trägers abgeschieden sind, werden insbesondere in synthesechemischen und petrochemischen Prozessen eingesetzt, um verschiedenste Edukte in gewünschte Zwischenprodukte oder Endprodukte umzusetzen bzw. um verschiedene Schnitte der Erdölaufarbeitung chemisch zu veredeln. Darüber hinaus werden geträgerte Edelmetallkatalysatoren insbesondere auch als Oxidationskatalysatoren in der Reinigung von Abgasen von Verbrennungsmotoren eingesetzt.

Mit Edelmetall beladene Trägerkatalysatoren werden in der Regel mittels eines mehrstufigen Verfahrens hergestellt. Dabei wird beispielsweise in einem ersten Schritt ein Trägermaterial mit einer Edelmetallsalzlösung des gewünschten Edelmetalls imprägniert. Nach dem Entfernen des Lösungsmittels vom Trägermaterial in einem nachfolgenden Schritt wird dann in einem weiteren Schritt das Trägermaterial kalziniert, wobei das Edelmetall durch die thermische Behandlung in eine Oxidform überführt werden kann. Danach wird in einem weiteren Schritt die Edelmetallkomponente, beispielsweise mittels Wasserstoff, Kohlenmonoxid oder nasschemischer Reduktionsmittel, in das katalytisch aktive, hochdisperse Edelmetall der Oxidationsstufe 0 überführt. Zu Lagerungszwecken kann der geträgerte Edelmetallkatalysator in einem abschließenden Schritt stabilisiert werden, beispielsweise durch Nassstabilisierung mittels eines Öls oder durch Trockenstabilisierung mittels einer Anoxidierung (Passivierung) der abgeschiedenen Edelmetallpartikel.

Die Aktivität von geträgerten Edelmetallkatalysatoren ist in der Regel abhängig von der Größe der Edelmetallpartikel. Die im Stand der Technik bekannten geträgerten Edelmetallkatalysatoren weisen den Nachteil auf, dass sie im Laufe ihres Einsatzes aufgrund einer Sinterung der Edelmetallpartikel zu größeren Einheiten und einer damit einhergehenden Verringerung an katalytisch aktiver Oberfläche an Aktivität verlieren. Dabei ist die Geschwindigkeit dieses so genannten thermischen Alterungsprozesses abhängig von der Höhe der Temperatur, bei welcher der Katalysator eingesetzt wird. Und zwar nimmt mit steigender Einsatztemperatur die Geschwindigkeit des genannten Alterungsprozesses zu, wofür vermutlich eine erhöhte Mobilität der Edelmetallpartikel auf der Trägermaterialoberfläche und eine damit einhergehende erhöhte Sinterungstendenz ursächlich ist.

Die US 4,912,072 offenbart einen zeolithischen Katalysator vom Strukturtyp L, der durch Behandeln des Zeolithpulvers mit einer wässrigen Pt(NH₃)₄Cl₂H₂O-Lösung unter Schall und anschließender Reduktion mit Wasserstoff hergestellt wird. Bei einem Platingehalt von weniger als 2x10⁻² mmol Pt/g ist bei dem so hergestellten Platinkatalysator ausschließlich die innere Oberfläche mit Platin beschichtet.

Die US 2006/0211569 A1 offenbart einen Oxidationskatalysator zur Behandlung von Abgasen, der hergestellt wird, indem ein Washcoat bestehend aus einem temperaturbeständigen anorganischen Oxid, einem Zeolith und Zinnoxid mit Platinsulfitsäure im Porenfüllverfahren imprägniert wird, gefolgt von Trocknen und Kalzinieren.

Im Stand der Technik ist bereits eine Vielzahl von Versuchen unternommen worden, Katalysatoren herzustellen, die bei Hochtemperaturanwendungen eine hohe Aktivität aufweisen und einem nur geringen thermischen Alterungsprozess unterliegen. Kubanek et al. "Microporous and Mesoporous Materials 77 (2005) 89-96" beispielsweise beschreiben die Herstellung eines geträgerten Platinkatalysators durch Imprägnieren eines Zeolithen vom Strukturtyp MFI (SH27) mit der Pt-Vorläuferverbindung Pt(NH₃)₄(NO₃)₂ und anschließender Kalzinierung des mit der Vorläuferverbindung beladenen Zeolithen unter einer Schutzgasatmosphäre. Bei der Verwendung von Pt(NH₃)₄(NO₃)₂ kommt es zu einer Autoreduktion bei relativ hohen Temperaturen. Der so hergestellte geträgerte Platinkatalysator weist jedoch eine verhältnismäßig geringe Aktivität sowie eine verhältnismäßig hohe Tendenz zur thermischen Alterung auf.

Aufgabe der vorliegenden Erfindung ist es daher, ein Verfahren insbesondere zur Herstellung einer Platinkatalysator-Vorstufe bereitzustellen, mittels welcher geträgerte Platinkatalysatoren hergestellt werden können, die gegenüber den aus dem Stand der Technik bekannten Platinkatalysatoren eine erhöhte Aktivität aufweisen.

Desweiteren ist es eine Aufgabe der vorliegenden Erfindung, ein Verfahren zur Herstellung einer Platinkatalysator-Vorstufe bereitzustellen, mittels welcher geträgerte Platinkatalysatoren hergestellt werden können, die eine verhältnismäßig geringe Tendenz zur thermischen Alterung zeigen und entsprechend über lange Standzeiten hinweg ihre katalytische Aktivität nahezu unverändert beibehalten.

Diese Aufgabe wird durch ein Verfahren gelöst, umfassend die Schritte:
a) Imprägnieren eines offenporigen Trägermaterials mit Platinsulfitsäure;
b) Kalzinieren des imprägnierten Trägermaterials unter einem Schutzgas.

Überraschenderweise wurde aufgefunden, dass mittels des erfindungsgemäßen Verfahrens eine Platinkatalysator-Vorstufe erhältlich ist, aus der nach der Überführung der Platinkomponente in die Oxidationsstufe 0 ein geträgerter Platinkatalysator resultiert, der sich durch eine erhöhte Aktivität auszeichnet.

Darüber hinaus wurde überraschenderweise festgestellt, dass mittels Imprägnieren eines offenporigen Trägermaterials mit Platinsulfitsäure und Kalzinieren des imprägnierten Trägermaterials unter einer Schutzgasatmosphäre eine Platinkatalysator-Vorstufe erhältlich ist, mittels derer durch Reduktion der Platinkomponente in die Oxidationsstufe 0 ein geträgerter Platinkatalysator hergestellt werden kann, der bei verhältnismäßig hohen Temperaturen eine sehr geringe Tendenz zur thermischen Alterung zeigt und über verhältnismäßig lange Standzeiten hinweg seine katalytische Aktivität weitgehend unverändert beibehält.

Diese Vorteile eines über den Weg des erfindungsgemäßen Verfahrens hergestellten Platinkatalysators kommen insbesondere bei Hochtemperaturanwendungen zum Tragen, wie beispielsweise in der Oxidationskatalyse, in welchen entsprechende, auf herkömmlichem Wege hergestellte Platinkatalysatoren aufgrund einer durch die herrschenden hohen Temperaturen bewirkten hohen Mobilität der Platinpartikel und einer damit einhergehenden erhöhten Sinterungstendenz zu einer schnellen thermischen Alterung neigen.

Mittels des erfindungsgemäßen Verfahrens können Platinkatalysator-Vorstufen und hieraus nach Reduzierung letztlich geträgerte Platinkatalysatoren hergestellt werden, d.h. geträgerte Platinkatalysatoren, die Pt der Oxidationsstufe 0 umfassen. Bei den Platinkatalysatoren kann es sich dabei sowohl um Metallkatalysatoren handeln, die neben Pt der Oxidationsstufe 0 ein oder mehrere zusätzliche Übergangsmetalle beliebiger Oxidationsstufe oder der Oxidationsstufe 0 enthalten, vorzugsweise Edelmetalle, als auch um reine Platinkatalysatoren, die als katalytisch aktives Metall nur Pt der Oxidationsstufe 0 enthalten. Liegt in dem Platinkatalysator neben Pt noch ein weiteres Übergangsmetall der Oxidationsstufe 0 vor, so können die Metalle in Form von Partikel reinen Metalls oder in Form von Legierungspartikel vorliegen. Zur Herstellung von Platinkatalysatoren, die neben Pt zumindest noch ein weiteres Übergangsmetall der Oxidationsstufe 0 umfassen, z.B. Ag, kann im Rahmen des erfindungsgemäßen Verfahrens das offenporige Trägermaterial beispielsweise mit Platinsulfitsäure und mit einer weiteren entsprechenden Übergangsmetallverbindung imprägniert werden, bevor die Metallkomponenten in die Oxidationsstufe 0 überführt werden.

Es wird darauf verwiesen, dass die über den Weg des erfindungsgemäßen Verfahrens erhältlichen Katalysatoren nicht auf Katalysatoren beschränkt sind, in denen als Metall nur Pt vorliegt. Es ist auch denkbar, dass neben Platin auch schwer reduzierbare Metalloxide vorliegen.

In einem Schritt des erfindungsgemäßen Verfahrens wird das offenporige Trägermaterial mit Platinsulfitsäure imprägniert. Platinsulfitsäure ist im Stand der Technik bekannt und wird dort häufig als "PSA" (Platinum Sulfite Acid) bezeichnet. Platinsulfitsäure ist die Chemical Abstract Number 61420-92-6 zugeordnet und ist im Handel frei erhältlich, beispielsweise bei Heraeus, Hanau, Deutschland als 10,4 %ige Platinsulfitsäure-Lösung.

In dem erfindungsgemäßen Verfahren wird die Platinsulfitsäure bevorzugt in Form einer wässrigen Platinsulfitsäure-Lösung enthaltend 0,01 bis 15 Gew-% Pt (Metall) eingesetzt. Weiter bevorzugt ist es, die Platinsulfitsäure in Form einer wässrigen Platinsulfitsäure-Lösung enthaltend 0,1 bis 8 Gew.-% Pt (Metall) in das erfindungsgemäße Verfahren einzusetzen, mehr bevorzugt in Form einer wässrigen Platinsulfitsäure-Lösung enthaltend 1 bis 6 Gew.-% Pt (Metall)und besonders bevorzugt in Form einer wässrigen Platinsulfitsäure-Lösung enthaltend 2,5 bis 3,5 Gew.-% Pt (Metall). Am meisten bevorzugt ist es, die Platinsulfitsäure in Form einer wässrigen Platinsulfitsäure-Lösung enthaltend 2,8 bis 3,3 Gew.-% Pt (Metall) in das erfindungsgemäße Verfahren einzusetzen.

Entsprechend einer bevorzugten Ausführungsform des erfindungsgemäßen Verfahrens umfasst das Verfahren ferner den Schritt: Überführen der Platinkomponente der kalzinierten Platinsulfitsäure in die Oxidationsstufe 0. Dabei wird das mit Platinsulfitsäure imprägnierte Trägermaterial nach der Kalzinierung einem Reduktionschritt unterworfen. Für den Fall, dass das erfindungsgemäße Verfahren den vorgenannten Schritt des Überführens der Platinkomponente der kalzinierten Platinsulfitsäure in die Oxidationsstufe 0 umfasst, betrifft dass erfindungsgemäße Verfahren ein Verfahren zur Herstellung eines geträgerten Platinkatalysators, wobei der Platinkatalysator neben Pt der Oxidationsstufe 0 ein oder mehrere weitere Übergangsmetalle, insbesondere Edelmetalle, der Oxidationsstufe 0 umfassen kann.

Das Überführen der Platinkomponente der kalzinierten Platinsulfitsäure in die Oxidationsstufe 0 kann sowohl auf nasschemischem Wege erfolgen, das heißt mittels einer reduzierend wirkenden Lösung, als auch auf trockenchemischem Wege, dass heißt mittels eines reduzierend wirkenden Gases. Erfindungsgemäß bevorzugt ist, dass das Überführen der Platinkomponente der kalzinierten Platinsulfitsäure in die Oxidationsstufe 0 auf trockenchemischem Wege erfolgt. Dadurch ist die Möglichkeit gegeben, die Reduktion auf verfahrenstechnisch einfache Weise bei verhältnismäßig hohen Temperaturen durchzuführen, was eine schnelle und vollständige Reduktion der Platinkomponente begünstigt.

Gemäß einer weiter bevorzugten Ausführungsform des erfindungsgemäßen Verfahrens ist es vorgesehen, dass das Überführen der Platinkomponente der kalzinierten Platinsulfitsäure in die Oxidationsstufe 0 bei einer Temperatur von zumindest 100 °C erfolgt. In diesem Zusammenhang ist es bevorzugt, dass die Reduktion der Platinkomponente bei einer Temperatur von 100 °C bis 400 °C durchgeführt wird, mehr bevorzugt bei einer Temperatur von 200 °C bis 350 °C, weiter bevorzugt bei einer Temperatur von 275 °C bis 325 °C und besonders bevorzugt bei einer Temperatur von 300 °C.

Wie bereits vorstehend ausgeführt wurde, kann es erfindungsgemäß bevorzugt sein, dass das Überführen der Platinkomponente der kalzinierten Platinsulfitsäure in die Oxidationsstufe 0 auf trockenchemischem Wege erfolgt. Dabei kann grundsätzlich jedes gasförmige oder vergasbare Reduktionsmittel zum Einsatz kommen, mittels welchem die Platinkomponente reduziert werden kann, wie beispielsweise Wasserstoff, Kohlenmonoxid, Ethen bzw. Methanol, Ethanol etc. Gemäß einer besonders bevorzugten Ausführungsform des erfindungsgemäßen Verfahrens ist es vorgesehen, dass das Überführen der Platinkomponente der kalzinierten Platinsulfitsäure in die Oxidationsstufe 0 mittels Wasserstoff erfolgt.

Wird als Reduktionsmittel Wasserstoff verwendet, so kann es bevorzugt sei, dass der Wasserstoff mit einem Inertgas wie beispielsweise Stickstoff oder einem Edelgas wie Helium, Neon, Argon, Krypton und/oder Xenon verdünnt ist, wobei Stickstoff besonders kostengünstig und entsprechend erfindungsgemäß bevorzugt ist. Erfindungsgemäß bevorzugt ist beispielsweise das Überführen der Platinkomponente der kalzinierten Platinsulfitsäure in die Oxidationsstufe 0 durch Reduktion unter einer Atmosphäre bestehend aus 0,1 Gew.-% bis 100 Gew.-% Wasserstoff, vorzugsweise 3 bis 5 Gew.-% Wasserstoff, und Rest Inertgas.

Ferner erfindungsgemäß bevorzugt ist beispielsweise das Überführen der Platinkomponente der kalzinierten Platinsulfitsäure in die Oxidationsstufe 0 durch Reduktion unter einer Atmosphäre bestehend aus 10 Gew.-% bis 60 Gew.-% Wasserstoff, vorzugsweise 15 bis 30 Gew.-% Wasserstoff, und Rest Inertgas.

Um den Gehalt des aus dem Verfahren der Erfindung resultierenden Platinkatalysators an Schwefel weitgehend zu minimieren, kann es gemäß einer weiter bevorzugten Ausführungsform des erfindungsgemäßen Verfahrens vorgesehen sein, dass die Schritte des Kalzinierens des imprägnierten Trägermaterials unter Schutzgas und des Überführens der Platinkomponente der kalzinierten Platinsulfitsäure in die Oxidationsstufe 0 mehrmals durchgeführt werden. Beispielsweise können die beiden genannten Verfahrensschritte jeweils 2, 3, 4 oder 5 Mal durchgeführt werden, wobei nach einem jeden Kalzinierungsschritt das Überführen der Platinkomponente in die Oxidationsstufe 0 durchgeführt wird.

Im Sinne der vorliegenden Erfindung ist es weiter bevorzugt, dass die Reduktion für eine Dauer von mindestens 1 Minute, bevorzugt mindestens 30 Minuten, weiter bevorzugt mindestens 1 Stunde und am meisten bevorzugt von mindestens 3 Stunden durchgeführt wird, wobei eine Dauer von 4 oder 5 Stunden am meisten bevorzugt ist.

Das Imprägnieren des offenporigen Trägermaterials mit Platinsulfitsäure im Rahmen der vorliegenden Erfindung kann im Prinzip nach jeder dem Fachmann aus dem Stand der Technik bekannten und als geeignet erachteten Methode erfolgen. Beispiele für erfindungsgemäß bevorzugte Methoden sind das Aufsprühen einer Platinsulfitsäure-Lösung auf das Trägermaterial, das Eintauchen des Trägermaterials in eine Platinsulfitsäure-Lösung oder die so genannte Incipient-Wetness Methode (Porenfüllmethode), bei welcher das Trägermaterial mit einem seinem Porenvolumen entsprechenden Lösungsvolumen versetzt wird.

Soll das Auftragen der Platinsulfitsäure-Lösung durch Aufsprühen der Lösung auf das Trägermaterial erfolgen, so kann gemäß der vorliegenden Erfindung das Aufsprühen durch jede dem Fachmann aus dem Stand der Technik bekannte Sprühmethode erfolgen.

Ist es vorgesehen, dass das Auftragen der Platinsulfitsäure-Lösung durch Eintauchen des Trägermaterials in die Lösung erfolgen soll, so erfolgt dies, indem das Trägermaterial in die Platinsulfitsäure-Lösung erst eingetaucht und danach - beispielsweise durch Absaugen - von nicht an der Trägermaterialoberfläche haftender Lösung befreit wird.

Erfindungsgemäß besonders bevorzugt ist es, dass das Imprägnieren des Trägermaterials mit Platinsulfitsäure mittels der Incipient-Wetness-Methode erfolgt. Bei dieser Methode wird das offenporige Trägermaterial mit einer Lösung des Imprägnierungsmittels - hier Platinsulfitsäure- beladen, wobei das Volumen der Lösung dem Porenvolumen des Trägermaterials entspricht, weshalb das Zeolithmaterial nach der Beladung mit der Lösung äußerlich trocken und damit rieselfähig ist. Die Incipient-Wetness-Methode ist dem Fachmann auch unter der Bezeichnung Pore-Filling-Methode bekannt.

Bei dem offenporigen Trägermaterial der vorliegenden Erfindung handelt es sich um jedes Trägermaterial, das dem Fachmann als für den erfindungsgemäßen Zweck als geeignet bekannt ist. Bevorzugt handelt es sich bei dem offenporigen Trägermaterial um ein anorganisches offenporiges Trägermaterial.

Weiter ist es bevorzugt, dass es sich bei dem offenporigen Trägermaterial um ein Trägermaterial mit monomodaler oder mit polymodaler Porenverteilung handelt.

Entsprechend einer weiter bevorzugten Ausführungsform des erfindungsgemäßen Verfahrens umfasst das Trägermaterial ein Material ausgewählt aus der Gruppe bestehend aus Titanoxid; γ-, θ- oder Δ- Aluminiumoxid; Ceroxid; Siliziumoxid; Zinkoxid; Magnesiumoxid; Aluminium-Siliziumoxid; Siliziumcarbid und Magnesiumsilikat oder eine Mischung von zwei oder mehr der vorgenannten Materialien. Ferner kann es bevorzugt sein, dass das Trägermaterial aus einem der vorgenannten Materialien oder Mischungen besteht.

Gemäß einer weiter bevorzugten Ausführungsform des erfindungsgemäßen Verfahrens ist es vorgesehen, dass das Trägermaterial ein Zeolithmaterial ist. Unter einem Zeolithmaterial wird im Rahmen der vorliegenden Erfindung gemäß einer Definition der International Mineralogical Association (D.S. Coombs et al., Can. Mineralogist, 35, 1997, 1571) eine kristalline Substanz mit einer durch ein Gerüst aus miteinander verbundenen Tetraedern charakterisierte Struktur verstanden. Dabei besteht jedes Tetraeder aus vier Sauerstoffatomen, die ein Zentralatom umgeben, wobei das Gerüst offene Hohlräume in Form von Kanälen und Käfigen enthält, die normalerweise von Wassermolekülen und Extragerüstkationen, welche häufig ausgetauscht werden können, besetzt sind. Die Kanäle des Materials sind dabei groß genug, um Gastverbindungen den Zugang zu erlauben. Bei den hydratisierten Materialien erfolgt die Dehydratisierung meistens bei Temperaturen unterhalb von etwa 400 C° und ist zum größten Teil reversibel.

Gemäß einer weiter bevorzugten Ausführungsform des erfindungsgemäßen Verfahrens ist es vorgesehen, dass das Zeolithmaterial ein mikroporöses oder ein mesoporöses Zeolithmaterial ist. Dabei sollen unter den Begriffen "mikroporöses Zeolithmaterial" und "mesoporöses Zeolithmaterial" gemäß der Einteilung poröser Festkörper gemäß IUPAC (International Union of Pure and Applied Chemistry) Zeolithmaterialien verstanden werden, deren Poren einen Durchmesser von kleiner als 2 nm bzw. einen Durchmesser von 2 nm bis 50 nm aufweisen.

Das in das erfindungsgemäße Verfahren einzusetzende Zeolithmaterial kann vorzugsweise einem der nachstehenden Strukturtypen entsprechen: ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AWO, AWW, BCT, BEA, BEC, BIK, BOG, BPH, BRE, CAN, CAS, CDO, CFI, CGF, CGS, CHA, CHI, CLO, CON, CZP, DAC, DDR, DFO, DFT, DOH, DON, EAB, EDI, EMT, EON, EPI, ERI, ESV, ETR, EUO, EZT, FAR, FAU, FER, FRA, GIS, GIU, GME, GON, GOO, HEU, IFR, IHW, ISV, ITE, ITH, ITW, IWR, IWV, IWW, JBW, KFI, LAU, LEV, LIO, LIT, LOS, LOV, LTA, LTL, LTN, MAR, MAZ, MEI, MEL, MEP, MER, MFI, MFS, MON, MOR, MOZ, MSE, MSO, MTF, MTN, MTT, MTW, MWW, NAB, NAT, NES, NON, NPO, NSI, OBW, OFF, OSI, OSO, OWE, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN, SFO, SGT, SIV, SOD, SOS, SSY, STF, STI, STT, SZR, TER, THO, TON, TSC, TUN, UEI, UFI, UOZ, USI, UTL, VET, VFI, VNI, VSV, WEI, WEN, YUG und ZON, wobei Zeolithmaterialien vom Strukturtyp Beta (BEA) besonders bevorzugt sind. Die vorstehende Dreibuchstabencode-Nomenklatur entspricht dabei der "IUPAC Commission of Zeolite Nomenclature".

Erfindungsgemäß ebenfalls bevorzugt sind die Mitglieder mesoporöser Zeolithmaterialien der Familie, die in der Literatur unter der Bezeichnung "MCM" zusammengefasst werden, wobei es sich bei dieser Bezeichnung nicht um einen bestimmten Strukturtypus handelt (vgl. http://www.iza-structure.org/databases). Erfindungsgemäß besonders bevorzugt sind mesoporöse Silikate, welche als MCM-41 oder MCM-48 bezeichnet werden. MCM-48 besitzt eine 3D-Struktur aus Mesoporen, wodurch das katalytisch aktive Metall in den Poren besonders leicht zugänglich ist. MCM-41 ist insbesondere bevorzugt und weist eine hexagonale Anordnung von Mesoporen mit einheitlicher Größe auf. Das MCM-41-Zeolithmaterial hat ein Sio₂/Al₂O₃-Molverhältnis von vorzugsweise größer als 100, mehr bevorzugt von größer als 200 und am meisten bevorzugt von größer als 300. Weitere bevorzugte mesoporöse Zeolithmaterialien, die im Rahmen der vorliegenden Erfindung eingesetzt werden können, sind solche, welche in der Literatur als MCM-1, MCM-2, MCM-3, MCM-4, MCM-5, MCM-9, MCM-10, MCM-14, MCM-22, MCM-35, MCM-37, MCM-49, MCM-58, MCM-61, MCM-65 oder MCM-68 bezeichnet werden.

Welches Zeolithmaterial in dem erfindungsgemäßen Verfahren einzusetzen ist, hängt in erster Linie von dem Anwendungszweck des mittels des erfindungsgemäßen Verfahrens herzustellenden Katalysators ab. Im Stand der Technik sind eine Vielzahl von Methoden bekannt, um die Eigenschaften von Zeolithmaterialien, beispielsweise den Strukturtyp, den Porendurchmesser, den Kanaldurchmesser, die chemische Zusammensetzung, die Ionenaustauschfähigkeit sowie Aktivierungseigenschaften, auf einen entsprechenden Anwendungszweck hin maßzuschneidern.

Das in dem erfindungsgemäßen Verfahren einzusetzende Zeolithmaterial kann beispielsweise ein Silikat, ein Aluminiumsilikat, ein Aluminiumphosphat, ein Siliciumaluminiumphosphat, ein Metallaluminiumphosphat, ein Metallaluminiumphosphosilikat, ein Galliumaluminiumsilikat, ein Galliumsilikat, ein Boroaluminiumsilikat, ein Borsilikat oder ein Titansilikat sein, wobei Aluminiumsilikate und Titansilikate besonders bevorzugt sind.

Unter dem Begriff "Aluminiumsilikat" wird gemäß der Definition der International Mineralogical Association (D.S.Coombs et al., Can. Mineralogist, 35, 1997, 1571) eine kristalline Substanz mit Raumnetzstruktur der allgemeinen Formel Mⁿ⁺[(AlO₂)ₓ(SiO₂)_{y}]xH₂O verstanden, die aus SiO_{4/2}- und AlO_{4/2}-Tetraeder aufgebaut sind, die durch gemeinsame Sauerstoffatome zu einem regelmäßigen dreidimensionalen Netzwerk verknüpft sind. Das Atomverhältnis von Si/Al=y/x beträgt immer größer/gleich 1 gemäß der sogenannten "Löwenstein-Regel", die das benachbarte Auftreten zweier benachbarter negativ geladener AlO_{4/2}-Tetraeder verbietet. Dabei stehen bei einem geringen Si/Al-Atomverhältnis zwar mehr Austauschplätze für Metalle zur Verfügung, der Zeolith wird jedoch zunehmend thermisch instabiler.

Die oben genannten Zeolithmaterialien können im Rahmen der vorliegenden Erfindung sowohl in der Alkali-Form, beispielsweise in der Na- und/oder K-Form, als auch in der Erdalkali-Form, Ammonium-Form oder in der H-Form in das Verfahren eingesetzt werden. Darüber hinaus ist es auch möglich, dass Zeolithmaterial in einer Misch-Form einzusetzen.

Entsprechend einer weiter bevorzugten Ausführungsform des erfindungsgemäßen Verfahrens kann es vorgesehen sein, dass zwischen Schritt a) und Schritt b) ein Trocknungsschritt erfolgt.

Der Trocknungsschritt wird zwischen dem Imprägnieren und dem Kalzinieren durchgeführt. Die Trocknungstemperatur liegt bevorzugt zwischen 25 °C und 250 °C, mehr bevorzugt zwischen 50 °C und 200 °C, weiter bevorzugt zwischen 100 °C und 180 °C und besonders bevorzugt bei 120 °C.

Getrocknet wird bevorzugt über einen Zeitraum von mehr als 1 min, mehr bevorzugt über einen Zeitraum von mehr als 1 h, weiter bevorzugt über einen Zeitraum von mehr als 5 h und noch mehr bevorzugt über einen Zeitraum von mehr als 12 h, wobei eine Trocknungszeit von 10 h besonders bevorzugt sein kann. In diesem Zusammenhang kann es überdies vorteilhaft sein, wenn die Dauer des Trocknungsschritts einen Zeitraum von 48 h nicht überschreitet, bevorzugt einen Zeitraum von 24 h nicht überschreitet.

Unter dem Begriff "Kalzinieren" wird allgemein ein Erhitzen bei hohen Temperaturen verstanden mit dem Ziel, das behandelte Material oder eine Komponente davon beispielsweise stofflich oder strukturell zu verändern. Durch eine Kalzinierung kann beispielsweise ein thermischer Abbau, ein Phasenübergang oder die Entfernung von flüchtigen Substanzen erzielt werden.

Im Rahmen der vorliegenden Erfindung wird die Kalzinierung bevorzugt in einem Temperaturbereich von 300 °C bis 1200 °C durchgeführt, mehr bevorzugt in einem Temperaturbereich von 300 °C bis 1000 °C, weiter bevorzugt in einem Temperaturbereich von 400 °C bis 950 °C, besonders bevorzugt in einem Temperaturbereich von 700 bis 900 °C und am meisten bevorzugt in einem Temperaturbereich von 730 °C bis 900 °C.

Es ist überdies besonders bevorzugt, dass die Kalzinierung bei einer Temperatur von zumindest 750 °C durchgeführt wird. Bei einer Kalzinierung bei einer Temperatur von zumindest 750 °C können mittels des erfindungsgemäßen Verfahrens geträgerte Platinkatalysatoren erhalten werden, die trotz hoher Platinbeladung von beispielsweise 3 Gew.-% bezogen auf das Gewicht des Platins und des offenporigen Trägermaterials weitgehend frei von Schwefel sind. So können mittels des erfindungsgemäßen Verfahrens beispielsweise Platinkatalysatoren hergestellt werden, die 1 bis 5 Gew.-% Platin enthalten bezogen auf das Gewicht des Platins und des Trägermaterials und einen Schwefelgehalt von kleiner 0,004 Gew.-% aufweisen bezogen auf das Gewicht des Platins und des Trägermaterials. Ein geringer Gehalt an Schwefel ist besonders vorteilhaft, da Schwefel insbesondere bezüglich Edelmetalle als Katalysatorgift wirkt.

Die Aufheizrate bei der Kalzinierung liegt bevorzugt bei 0,5 °C/min bis 5 °C/min, mehr bevorzugt bei 1 °C/min bis 4°C/min und besonders bevorzugt bei 2 °C/min.

Die Dauer der Kalzinierung bei maximaler Temperatur liegt bevorzugt in einem Bereich von 1 min bis 48 h, mehr bevorzugt in einem Bereich von 30 min bis 12 h und besonders bevorzugt in einem Bereich von 1 h und 7 h, wobei eine Kalzinierdauer von 5 h oder 6 h besonders bevorzugt ist.

Im Rahmen der vorliegenden Erfindung wird die Kalzinierung unter einem Schutzgas durchgeführt. Unter Schutzgas werden dabei Gase oder Gasgemische verstanden, die als inerte schützende Atmosphäre verwendet werden können, beispielsweise zur Vermeidung unerwünschter chemischer Reaktionen. Im Rahmen der vorliegenden Erfindung können als Schutzgas insbesondere die Edelgase Helium, Neon, Argon, Krypton oder Xenon eingesetzt werden oder Gemische von zwei oder mehr der vorgenannten, wobei Argon als Schutzgas besonders bevorzugt ist. Neben den Edelgasen oder zusätzlich zu diesen kann beispielsweise auch Stickstoff als Schutzgas eingesetzt werden.

Ein typisches, durch die vorliegende Erfindung bereitgestelltes Verfahren, umfasst die Schritte:
a) Imprägnieren eines offenporigen Trägermaterials, insbesondere eines Zeolithmaterials, insbesondere eines Zeolithmaterials vom Strukturtyp BEA oder eines Zeolithmaterials aus der MCM-Familie, vorzugsweise eines Aluminiumsilikat- oder eines Titansilikat-Zeolithmaterials, mit Platinsulfitsäure, insbesondere mit einer Platinsulfitsäure-Lösung, vorzugsweise nach der Incipient-Wetness-Methode;
b) Kalzinieren, vorzugsweise bei einer Temperatur oberhalb von 750 °C, des imprägnierten Trägermaterials unter Schutzgas, vorzugsweise unter Argon;
c) gegebenenfalls Überführen der Platinkomponente der kalzinierten Platinsulfitsäure in die Oxidationsstufe 0, bevorzugt durch Reduktion mittels Wasserstoff, vorzugsweise bei einer Temperatur von zumindest 100 °C.

Die vorliegende Erfindung betrifft ferner eine Katalysator-Vorstufe oder einen Katalysator, erhältlich gemäß dem erfindungsgemäßen Verfahren. Mittels des erfindungsgemäßen Verfahrens können geträgerte Platinkatalysatoren erhalten werden, die sich im Vergleich zu den entsprechenden im Stand der Technik bekannten Platinkatalysatoren durch eine erhöhte Aktivität sowie durch eine erhöhte thermische Alterungsbeständigkeit auszeichnen, bzw. Katalysator-Vorstufen erhalten, die zu Platinkatalysatoren mit den genannten Vorteilen umgesetzt werden können.

Im speziellen betrifft die vorliegende Erfindung eine Katalysator-Vorstufe, erhältlich durch ein Verfahren umfassend die Schritte:
a) Imprägnieren eines offenporigen Trägermaterials, insbesondere eines Zeolithmaterials, vorzugsweise eines Zeolithmaterials vom Strukturtyp BEA oder eines Zeolithmaterials aus der MCM-Familie, mit Platinsulfitsäure nach der Incipient-Wetness-Methode;
b) Trocknen des imprägnierten Trägermaterials über einen Zeitraum von 12 h bei einer Temperatur von 120 °C;
c) Kalzinieren des imprägnierten und getrockneten Trägermaterials über einen Zeitraum von 5 h bei 790 °C unter Argon.

Im speziellen betrifft die vorliegende Erfindung darüber hinaus einen geträgerten Pt-Katalysator, erhältlich durch ein Verfahren umfassend die Schritte:
a) Imprägnieren eines offenporigen Trägermaterials, insbesondere eines Zeolithmaterials, vorzugsweise eines Zeolithmaterials vom Strukturtyp BEA oder eines Zeolithmaterials aus der MCM-Familie, mit Platinsulfitsäure nach der Incipient-Wetness-Methode;
b) Trocknen des imprägnierten Trägermaterials über einen Zeitraum von 12 h bei einer Temperatur von 120 °C;
c) Kalzinieren des imprägnierten und getrockneten Trägermaterials über einen Zeitraum von 5 h bei 790 °C unter Argon;
d) Überführen der Platinkomponente der kalzinierten Platinsulfitsäure in die Oxidationsstufe 0 durch Reduzieren der Platinkomponente mittels eines Gases bestehend aus 5 Vol.-% Wasserstoff in Stickstoff über einen Zeitraum von 5 h bei einer Temperatur von 300 °C.

Die vorliegende Erfindung betrifft ferner einen Katalysator, umfassend ein offenporiges Trägermaterial, bei dem es sich bevorzugt um ein Zeolithmaterial handelt, sowie Platin der Oxidationsstufe 0, wobei das XRD-Spektrum des Katalysators frei von Signalen elementaren Platins ist. Derartige Katalysatoren können mittels des erfindungsgemäßen Verfahrens hergestellt werden. Es wird vermutet, dass das XRD-Spektrum des Katalysators frei von Pt-Signalen ist, da die äußere Oberfläche des Trägermaterials im Wesentlichen frei oder vollständig frei von Metallpartikel einer Größe ist, die Röntgenstrahlung entsprechend dem Beugungsmuster des Platins beugen können.

Das Zeolithmaterial des erfindungsgemäßen Katalysators kann gemäß einer Definition der International Mineralogical Association (D.S. Coombs et al., Can. Mineralogist, 35, 1997, 1571) eine kristalline Substanz mit einer durch ein Gerüst aus miteinander verbundenen Tetraedern charakterisierte Struktur verstanden. Dabei besteht jedes Tetraeder aus vier Sauerstoffatomen, die ein Zentralatom umgeben, wobei das Gerüst offene Hohlräume in Form von Kanälen und Käfigen enthält, die normalerweise von Wassermolekülen und Extragerüstkationen, welche häufig ausgetauscht werden können, besetzt sind. Die Kanäle des Materials sind dabei groß genug, um Gastverbindungen den Zugang zu erlauben. Bei den hydratisierten Materialien erfolgt die Dehydratisierung meistens bei Temperaturen unterhalb von etwa 400 C° und ist zum größten Teil reversibel.

Gemäß einer weiter bevorzugten Ausführungsform des erfindungsgemäßen Katalysators ist es vorgesehen, dass das Zeolithmaterial ein mikroporöses oder ein mesoporöses Zeolithmaterial ist. Dabei sollen unter den Begriffen "mikroporöses Zeolithmaterial" und "mesoporöses Zeolithmaterial" gemäß der Einteilung poröser Festkörper gemäß IUPAC (International Union of Pure and Applied Chemistry) Zeolithmaterialien verstanden werden, deren Poren einen Durchmesser von kleiner als 2 nm bzw. einen Durchmesser von 2 nm bis 50 nm aufweisen.

Das Zeolithmaterial des erfindungsgemäßen Katalysators kann vorzugsweise einem der nachstehenden Strukturtypen entsprechen: ABW, ACO, AEI, AEL, AEN, AET, AFG, AFI, AFN, AFO, AFR, AFS, AFT, AFX, AFY, AHT, ANA, APC, APD, AST, ASV, ATN, ATO, ATS, ATT, ATV, AWO, AWW, BCT, BEA, BEC, BIK, BOG, BPH, BRE, CAN, CAS, CDO, CFI, CGF, CGS, CHA, CHI, CLO, CON, CZP, DAC, DDR, DFO, DFT, DOH, DON, EAB, EDI, EMT, EON, EPI, ERI, ESV, ETR, EUO, EZT, FAR, FAU, FER, FRA, GIS, GIU, GME, GON, GOO, HEU, IFR, IHW, ISV, ITE, ITH, ITW, IWR, IWV, IWW, JBW, KFI, LAU, LEV, LIO, LIT, LOS, LOV, LTA, LTL, LTN, MAR, MAZ, MEI, MEL, MEP, MER, MFI, MFS, MON, MOR, MOZ, MSE, MSO, MTF, MTN, MTT, MTW, MWW, NAB, NAT, NES, NON, NPO, NSI, OBW, OFF, OSI, OSO, OWE, PAR, PAU, PHI, PON, RHO, RON, RRO, RSN, RTE, RTH, RUT, RWR, RWY, SAO, SAS, SAT, SAV, SBE, SBS, SBT, SFE, SFF, SFG, SFH, SFN, SFO, SGT, SIV, SOD, SOS, SSY, STF, STI, STT, SZR, TER, THO, TON, TSC, TUN, UEI, UFI, UOZ, USI, UTL, VET, VFI, VNI, VSV, WEI, WEN, YUG und ZON, wobei Zeolithmaterialien vom Strukturtyp Beta (BEA) besonders bevorzugt sind. Die vorstehende Dreibuchstabencode-Nomenklatur entspricht dabei der "IUPAC Commission of Zeolite Nomenclature".

Erfindungsgemäß ebenfalls bevorzugt sind die Mitglieder mesoporöser Zeolithmaterialien der Familie, die in der Literatur unter der Bezeichnung "MCM" zusammengefasst werden, wobei es sich bei dieser Bezeichnung nicht um einen bestimmten Strukturtypus handelt (vgl. http://www.iza-structure.org/databases). Erfindungsgemäß besonders bevorzugt sind mesoporöse Silikate, welche als MCM-41 oder MCM-48 bezeichnet werden. MCM-48 besitzt eine 3D-Struktur aus Mesoporen, wodurch das katalytisch aktive Metall in den Poren besonders leicht zugänglich ist. MCM-41 ist insbesondere bevorzugt und weist eine hexagonale Anordnung von Mesoporen mit einheitlicher Größe auf. Das MCM-41-Zeolithmaterial hat ein SiO₂/Al₂O₃-Molverhältnis von vorzugsweise größer als 100, mehr bevorzugt von größer als 200 und am meisten bevorzugt von größer als 300. Weitere bevorzugte mesoporöse Zeolithmaterialien, die im Rahmen der vorliegenden Erfindung eingesetzt werden können, sind solche, welche in der Literatur als MCM-1, MCM-2, MCM-3, MCM-4, MCM-5, MCM-9, MCM-10, MCM-14, MCM-22, MCM-35, MCM-37, MCM-49, MCM-58, MCM-61, MCM-65 oder MCM-68 bezeichnet werden.

Welches Zeolithmaterial in dem erfindungsgemäßen Katalysator enthalten ist, hängt in erster Linie von dem Einsatzzweck des erfindungsgemäßen Katalysators ab. Im Stand der Technik sind eine Vielzahl von Methoden bekannt, um die Eigenschaften von Zeolithmaterialien, beispielsweise den Strukturtyp, den Porendurchmesser, den Kanaldurchmesser, die chemische Zusammensetzung, die Ionenaustauschfähigkeit sowie Aktivierungseigenschaften, auf einen entsprechenden Anwendungszweck hin maßzuschneidern.

Das Zeolithmaterial des erfindungsgemäßen Katalysators kann beispielsweise ein Silikat, ein Aluminiumsilikat, ein Aluminiumphosphat, ein Siliciumaluminiumphosphat, ein Metallaluminiumphosphat, ein Metallaluminiumphosphosilikat, ein Galliumaluminiumsilikat, ein Galliumsilikat, ein Boroaluminiumsilikat, ein Borsilikat oder ein Titansilikat sein, wobei Aluminiumsilikate und Titansilikate besonders bevorzugt sind.

Unter dem Begriff "Aluminiumsilikat" wird gemäß der Definition der International Mineralogical Association (D.S.Coombs et al., Can. Mineralogist, 35, 1997, 1571) eine kristalline Substanz mit Raumnetzstruktur der allgemeinen Formel Mⁿ⁺[(AlO₂)ₓ(SiO₂)_{y}]xH₂O verstanden, die aus SiO_{4/2}- und AlO_{4/2}-Tetraeder aufgebaut sind, die durch gemeinsame Sauerstoffatome zu einem regelmäßigen dreidimensionalen Netzwerk verknüpft sind. Das Atomverhältnis von Si/Al=y/x beträgt immer größer/gleich 1 gemäß der sogenannten "Löwenstein-Regel", die das benachbarte Auftreten zweier benachbarter negativ geladener AlO_{4/2}-Tetraeder verbietet. Dabei stehen bei einem geringen Si/Al-Atomverhältnis zwar mehr Austauschplätze für Metalle zur Verfügung, der Zeolith wird jedoch zunehmend thermisch instabiler.

Die oben genannten Zeolithmaterialien können in dem erfindungsgemäßen Katalysator sowohl in der Alkali-Form, beispielsweise in der Na- und/oder K-Form, als auch in der Erdalkali-Form, Ammonium-Form oder in der H-Form vorliegen. Darüber hinaus ist es auch möglich, dass das Zeolithmaterial in einer Misch-Form vorliegt, beispielsweise in einer Alkali-/Erdalkali-Mischform.

Der erfindungsgemäße Katalysator umfasst 1 bis 10 Gew.-% Platin bezogen auf das Gewicht des Platins und des Trägermaterials. Es konnte festgestellt werden, dass mittels des erfindungsgemäßen Verfahrens geträgerte Platinkatalysatoren erhältlich sind, deren XRD-Spektren trotz verhältnismäßig hoher Platinbeladung frei von Signalen des Platins sind und die trotz verhältnismäßig hoher Platinbeladung eine hohe thermische Alterungsbeständigkeit aufweisen. Überdies kann es in diesem Zusammenhang gemäß einer bevorzugten Ausführungsform des erfindungsgemäßen Katalysators vorgesehen sein, dass der Katalysator, bezogen auf das Gewicht des Platins und des Trägermaterials, 2 bis 5 Gew.-% Platin umfasst, weiter bevorzugt 2,2 bis 4,5 Gew.-%, besonders bevorzugt 2,5 bis 3,5 Gew.-% und am meisten bevorzugt 3 Gew.-%.

Entsprechend einer weiter bevorzugten Ausführungsform des erfindungsgemäßen Katalysators ist es vorgesehen, dass der Katalysator frei von weiteren Metallen der Oxidationsstufe 0 ist.

Wie bereits vorstehend ausgeführt, ist gemäß einer bevorzugten Ausführungsform des erfindungsgemäßen Katalysators das Trägermaterial ein Zeolithmaterial vom Strukturtyp Beta oder ein Zeolithmaterial aus der MCM-Familie.

Ferner kann es gemäß einer weiter bevorzugten Ausführungsform des erfindungsgemäßen Katalysators vorgesehen sein, dass die BET-Oberfläche des Zeolithmaterials 100 bis 1500 m²/g beträgt, bevorzugt 150 bis 1000 m²/g und mehr bevorzugt 200 bis 600 m²/g. Die BET-Oberfläche ist dabei nach der Ein-Punkt-Methode durch Adsorption von Stickstoff nach DIN 66132 zu bestimmen.

Gemäß einer weiter bevorzugten Ausführungsform des erfindungsgemäßen Katalysators kann es vorgesehen sein, dass der Katalysator als Pulver, als Formkörper oder als Monolith ausgebildet ist. Bevorzugte Formkörper sind beispielsweise Kugeln, Ringe, Zylinder, Lochzylinder, Triloben oder Kegel und ein bevorzugter Monolith ist beispielsweise ein Wabenkörper.

Unter der Dispersion eines geträgerten Metallkatalysators wird das Verhältnis der Anzahl aller Oberflächenmetallatome aller Metallpartikel eines Trägers zu der Gesamtzahl aller Metallatome der Metallpartikel verstanden. Im Allgemeinen ist es bevorzugt, wenn der Dispersionswert verhältnismäßig hoch ist, da in diesem Fall möglichst viele Metallatome für eine katalytische Reaktion frei zugänglich sind. Das heißt, dass bei einem verhältnismäßig hohen Dispersionswert eines geträgerten Metallkatalysators eine bestimmte katalytische Aktivität desselben mit einer verhältnismäßig geringen Menge an eingesetztem Metall erreicht werden kann. Entsprechend einer weiteren bevorzugten Ausführungsform des erfindungsgemäßen Katalysators beträgt die Dispersion der Platinpartikel 50 bis 100 %, vorzugsweise 55 bis 90 %, weiter vorzugsweise 60 bis 90 %, besonders bevorzugt 75 bis 85 %. Dabei sind die Werte der Dispersion mittels Wasserstoff gemäß DIN 66136-2 zu bestimmen.

Grundsätzlich ist es vorteilhaft, wenn das Platin in dem erfindungsgemäßen Katalysator in möglichst kleinen Partikeln vorliegt, da die Platinpartikel dann einen sehr hohen Dispersionsgrad aufweisen. Ein günstiger mittlerer Partikeldurchmesser hängt aber auch von der Anwendung ab, in welcher der Katalysator eingesetzt werden soll, sowie von der Porenverteilung und insbesondere der Porenradien und Kanalradien des Trägermaterials. Gemäß einer bevorzugten Ausführungsform des erfindungsgemäßen Katalysators weisen die Metallpartikel einen mittleren Durchmesser auf, der kleiner ist als der Porendurchmesser und der größer ist als der Kanaldurchmesser des Trägermaterials. Dadurch werden die Metallpartikel in dem Trägermaterial mechanisch gefangen, was zu einer hohen thermischen Alterungsbeständigkeit des erfindungsgemäßen Katalysators führt. Beispielsweise weisen die Metallpartikel einen mittleren Durchmesser von 0,5 bis 5 nm auf, bevorzugt einen mittleren Durchmesser von 0,5 bis 4 nm, mehr bevorzugt einen mittleren Durchmesser von 0,5 bis 3 nm und besonders bevorzugt einen mittleren Durchmesser von 0,5 bis 2 nm. Der mittlere Partikeldurchmesser ist vorzugsweise durch Aufschluss des Trägermaterials und Vermessung der verbleibenden Pt-Partikel mittels Transmission Electron Microscopie (TEM) zu bestimmen.

Die vorliegende Erfindung betrifft ferner die Verwendung eines erfindungsgemäßen Katalysators in einem Katalyseprozess, der oberhalb einer Temperatur von 700 °C durchgeführt wird.

Entsprechend einer bevorzugten Ausführungsform der erfindungsgemäßen Verwendung ist der Katalyseprozess eine Reinigung von Industrie- oder Fahrzeugabgasen, wie vorzugsweise Auto-, Schiff-, Zugabgasen etc.

Die nachfolgenden Beispiele dienen im Zusammenhang mit der Zeichnung der Erläuterung der Erfindung. Es zeigen:
- Fig. 1:: XRD-Spektrum eines gemäß des erfindungsgemäßen Verfahrens hergestellten ersten erfindungsgemäßen Katalysators(1) sowie eines ersten Vergleichskatalysators (2);
- Fig. 2:: Propan-Umsatz des ersten Katalysators (Quadrate), des ersten Katalysators nach Alterung (Kreise) und des ersten Vergleichskatalysators (Dreiecke) in der Aufheizphase in Abhängigkeit von der Temperatur;
- Fig. 3:: Propan-Umsatz des ersten Katalysators (Quadrate) und des ersten Vergleichskatalysators (Dreiecke) in der Temperaturhaltephase (550 °C) in Abhängigkeit von der Zeit;
- Fig. 4:: Propan-Umsatz des ersten Katalysators (Quadrate) und des ersten Vergleichskatalysators (Dreiecke) in der Abkühlphase in Abhängigkeit von der Temperatur;
- Fig. 5:: XRD-Spektren (ausschnittsweise) eines gemäß des erfindungsgemäßen Verfahrens hergestellten zweiten erfindungsgemäßen Katalysators (11) sowie eines zweiten (13) und dritten (12) Vergleichskatalysators;
- Fig. 6:: Propan-Umsatz des zweiten erfindungsgemäßen Katalysators (11), des zweiten Vergleichskatalysators (13) und des dritten Vergleichskatalysators (12) in der Aufheizphase in Abhängigkeit von der Temperatur.

### Beispiel 1:

Ein pulvriges Aluminiumsilikat-Zeolithmaterial (20 g) vom Strukturtyp Beta (BEA) in der H-Form mit einem Si/Al2-Atomverhältnis von 35 wurde mit 21,9 ml einer wässrigen Platinsulfitsäure-Lösung enthalten 3,2 Gew.-% Pt (berechnet als Metall) mittels der Incipient-Wetness-Methode imprägniert. Die Wasseraufnahme von getrocknetem BEA ist (bei 120 °C über Nacht) 9,2 g H₂O/10g BEA. Zu der PSA-Lösung wurden 12,96 g H₂O gegeben. Die Lösung hatte eine Pt-Konzentration von 3,2 Gew,-% (mit dieser Lösung wurde die Imprägnierung durchgeführt).

Nach der Imprägnierung wurde das Zeolithmaterial über Nacht bei einer Temperatur von 120 °C getrocknet.

Nach dem Trocknen wurde das imprägnierte Zeolithmaterial unter einer Argonatmosphäre über einen Zeitraum von 5 h bei einer Temperatur von 770 °C kalziniert. Die Aufheizrate betrug 2 °C/min und der Argon-Volumenstrom während der Aufheiz- und Kalzinierphase betrug 2 l/min.

Nach dem Kalzinieren wurde das mit Platin beladene Zeolithmaterial bei einer Temperatur von 300 °C mittels eines Gases enthaltend 5 Vol.-% Wasserstoff in Stickstoff (2 l/min) über einen Zeitraum von 5 h reduziert. Die Aufheizrate betrug 2 °C/min.

### Beispiel 2:

Der gemäß Beispiel 1 erhaltene Katalysator wurde zur Alterung für einen Zeitraum von 10 h bei einer Temperatur von 650 °C an der Luft kalziniert (Aufheizrate: 10 °C/min).

### Vergleichsbeispiel 1:

Es wurde ein Katalysator anlog dem Beispiel 1 hergestellt, mit dem einzigen Unterschied, dass das Kalzinieren an Luft erfolgte.

### XRD-Messung 1:

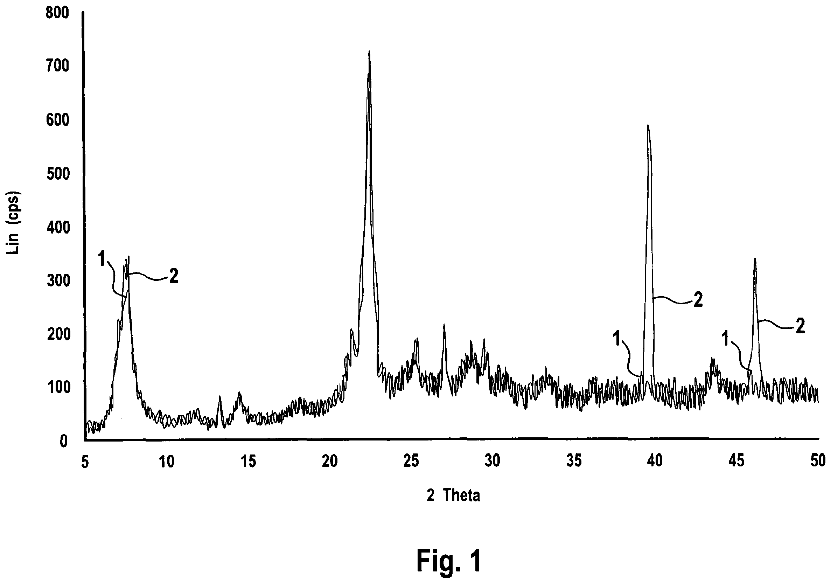

Der gemäß Beispiel 1 und Vergleichsbeispiel 1 hergestellte Katalysator wurde röntgendiffraktometrisch vermessen. Die gemessenen XRD-Spektren sind in der Figur 1 abgebildet, wobei das Spektrum des Beispiels 1 und des Vergleichsbeispiels 1 mit den Bezugszeichen 1 bzw. 2 belegt sind.

Das XRD-Spektrum des gemäß Beispiel 1 (Kalzinierung unter Argon) hergestellten Katalysators zeigt keine Pt-Signale, wohingegen das XRD-Spektrum des gemäß Vergleichsbeispiel 1 (Kalzinierung an der Luft) hergestellten Katalysators deutliche Pt-Signale zeigt. Und zwar ist das Signal bei einem 2 theta-Wert von ungefähr 40 ° der Pt(110)-Reflex (110 sind die Millerschen-Indizes), das Signal bei einem 2 theta-Wert von ungefähr 46,5 ° der Pt(200)-Reflex.

Das Fehlen der Pt-Reflexe bei dem Katalysator gemäß Beispiel 1 ist ein Indiz dafür, dass trotz der verhältnismäßig hohen Kalzinierungstemperatur keine größeren Platincluster auf der äußeren Oberfläche des Zeolithmaterials entstanden sind und sich das Platin in hochdisperser Form überwiegend in dem Zeolithmaterial befindet.

### Elementaranalyse:

Im Rahmen einer durchgeführten Elementaranalyse wurde festgestellt, dass der Katalysator gemäß Beispiel 1 einen Anteil an Schwefel von kleiner als 0,004 Gew.-% aufweist, während der gemäß Vergleichsbeispiel 1 hergestellte Katalysator einen Anteil an Schwefel von 0,155 Gew.-% aufweist.

### Aktivitätstest 1:

Die gemäß der Beispiele 1 und 2 sowie der gemäß des Vergleichsbeispiels 1 hergestellte Katalysator wurde einer Umsetzung von Propan als Aktivitätstest unter den nachstehenden Testbedingungen unterworfen.

### Testbedingungen:

| | |
|---|---|
| Partikelgröße: | 0,5-1,25 mm |
| Temperaturprofil: | Raumtemperatur (RT) → 550 °C (5 h) → RT |
| Aufheizrate: | 10 °C/min |
| Abkühlrate: | 20 °C/min |
| CO-Konzentration: | 800 ppm |
| Propan-Konzentration: | 200 ppm |
| Gasraumgeschwindigkeit (GHSV): | 100 000 h⁻¹ |
| Einwaage: | 7 g |
| Katalysator-Volumen: | 14 ml |

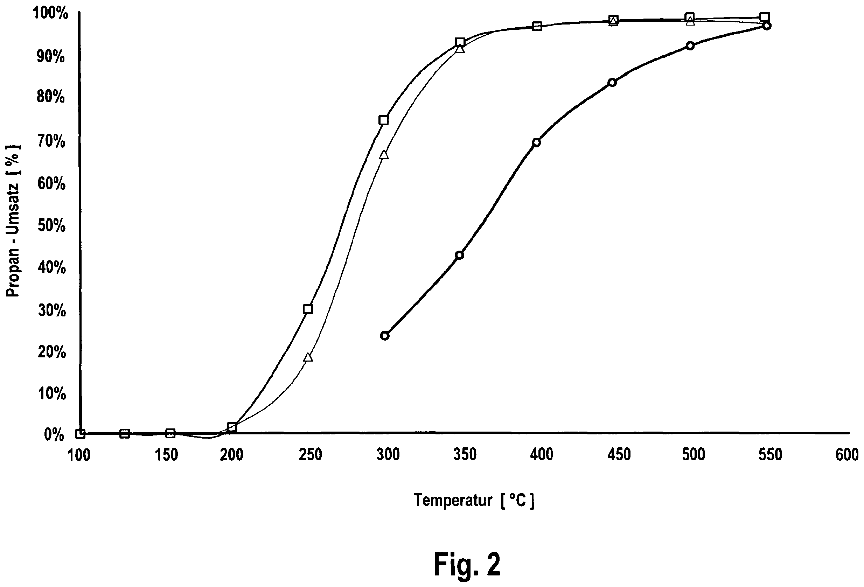

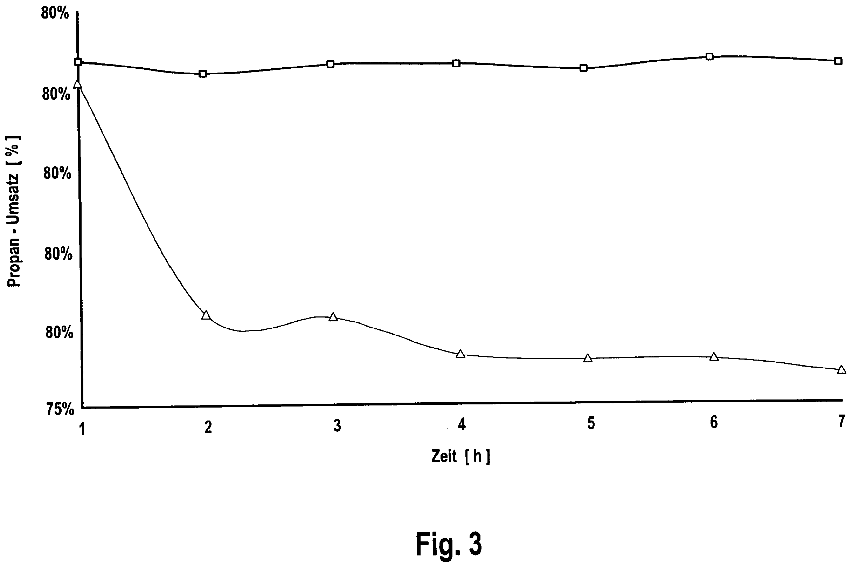

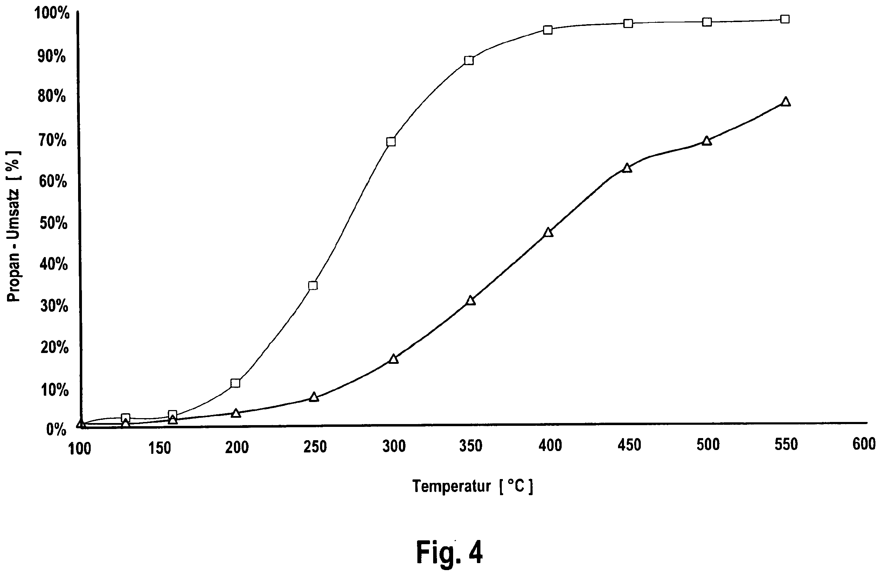

Figur 2 zeigt die Kurvenverläufe der gemessenen Propan-Umsätze in der Aufheizphase in Abhängigkeit von der Temperatur, Figur 3 die Kurvenverläufe der Propan-Umsätze während der Temperaturhaltephase in Abhängigkeit von der Zeit und Figur 4 zeigt die Kurvenverläufe der Propan-Umsätze in der Abkühlphase in Abhängigkeit von der Temperatur, wobei die Kurvenverläufe der Katalysatoren der Beispiele 1 und 2 und des

Vergleichsspiels 1 durch Quadrate, Kreise bzw. Dreiecke gekennzeichnet sind.

In der Aufheizphase zeigen die beiden Katalysatoren gemäß Beispiel 1 und Vergleichsbeispiel 1 die gleiche Aktivität und erreichen einen Umsatz von circa 95 % (Figur 2). Während der Temperaturhaltephase verringert sich die Aktivität des an Luft kalzinierten Katalysators gemäß Vergleichsbeispiel 1 deutlich, wohingegen der gemäß Beispiel 1 unter Argon kalzinierte Katalysator über die gesamte Temperaturhaltephase hinweg nahezu die gleiche Aktivität zeigt (Figur 3). In der Abkühlphase zeigt der Katalysator gemäß Beispiel 1 gegenüber dem des Vergleichsbeispiels 1 ebenfalls eine erhöhte Aktivität (Figur 4). Die Kurvenverläufe für den Katalysator gemäß Beispiel 1 sind in der Aufheiz- und der Abkühlphase nahezu identisch (Figuren 2 und 4).

Der thermisch gealterte Katalysator gemäß Beispiel 2 zeigt eine deutlich verringerte Aktivität im Bereich niedrigerer Temperaturen, erreicht aber den Umsatz des nicht gealterten Katalysators gemäß Beispiel 1 bei einer Temperatur von 550 °C (Figur 2). Die

### Vergleichsbeispiel 2:

20 g pulvriges Aluminiumsilikat-Zeolithmaterial vom Strukturtyp MFI (ZSM-5) in der Ammonium-Form mit einem Si/Al-Atomverhältnis von 27 wurden mit 3 Gew.-% Platin (berechnet als Metall und bezogen auf das Gewicht des Zeolithmaterials und des Platins) in Form von (NH₃)₄Pt(NO₃)₂ mittels der Incipient-Wetness-Methode imprägniert.

Nach der Imprägnierung wurde das Zeolithmaterial über Nacht bei einer Temperatur von 120 °C getrocknet.

Nach dem Trocknen wurde das imprägnierte Zeolithmaterial unter einer Argonatmosphäre über einen Zeitraum von 5 h bei einer Temperatur von 790 °C kalziniert. Die Aufheizrate von Raumtemperatur auf 300 °C betrug 0,3 °C/min, die Aufheizrate von 300 °C auf 790 °C betrug 4 °C/min und der Argon-Volumenstrom während der Aufheiz- und Kalzinierphase betrug 2 l/min. Die Zersetzung des (NH₃)₄Pt(NO₃)₂ verläuft reduktiv, so dass bei der Kalzinierung Pt der Oxidationsstufe 0 entsteht.

### Vergleichsbeispiel 3:

Es wurde ein Katalysator anlog dem Vergleichsbeispiel 2 hergestellt, mit dem einzigen Unterschied, dass als Zeolithmaterial ein pulvriges Aluminiumsilikat-Zeolithmaterial vom Strukturtyp Beta (BEA) in der H-Form mit einem Si/Al2-Atomverhältnis von 35 eingesetzt wurde.

### Beispiel 3:

Es wurde ein Katalysator anlog dem Vergleichsbeispiel 2 hergestellt, mit den Unterschieden, dass als Zeolithmaterial ein pulvriges Aluminiumsilikat-Zeolithmaterial vom Strukturtyp Beta (BEA) in der H-Form mit einem Si/Al2-Atomverhältnis von 35 eingesetzt wurde, dass die Aufheizrate von Raumtemperatur auf 790 °C 2 °C/min betrug und dass nach dem Kalzinieren das mit Platin beladene Zeolithmaterial bei einer Temperatur von 300 °C mittels eines Gases enthaltend 5 Vol.-% Wasserstoff in Stickstoff (2 l/min) über einen Zeitraum von 5 h reduziert wurde. Die Aufheizrate betrug 2 °C/min.

### XRD-Messung 2:

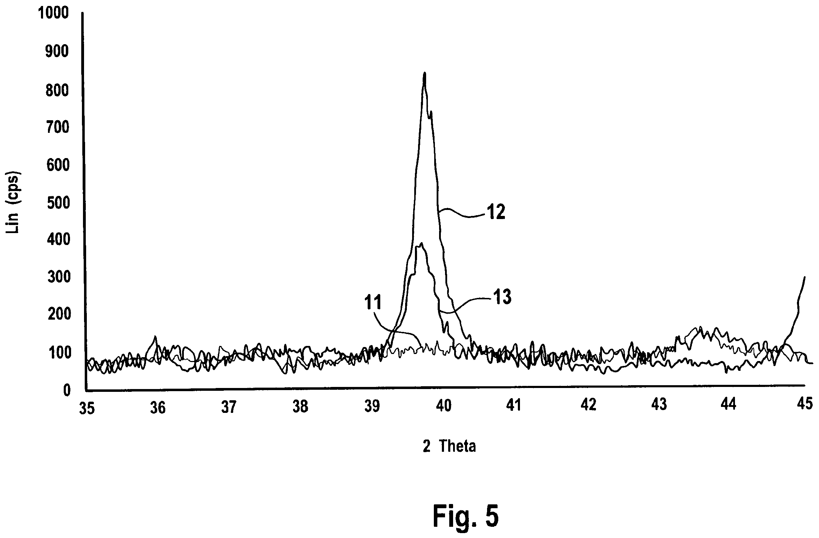

Der gemäß Beispiel 3 und die gemäß der Vergleichsbeispiele 2 und 3 hergestellten Katalysatoren wurden röntgendiffraktometrisch vermessen. Die gemessenen XRD-Spektren sind in der Figur 5 ausschnittsweise abgebildet, wobei das Spektrum des Beispiels 3 und der Vergleichsbeispiele 2 und 3 mit den Bezugszeichen 11, 13 bzw. 12 belegt sind.

Das XRD-Spektrum des gemäß Beispiel 3 hergestellten Katalysators zeigt keine Pt-Reflexe bei einem 2 theta-Wert von ungefähr 40 °, wohingegen die XRD-Spektren der gemäß der Vergleichsbeispiele 2 und 3 hergestellten Katalysatoren deutliche Pt-Reflexe zeigen. Und zwar ist das Signal bei einem 2 theta-Wert von ungefähr 40 ° der Pt(110)-Reflex.

Das Fehlen der Pt-Reflexe bei dem Katalysator gemäß Beispiel 3 ist ein Indiz dafür, dass keine größeren Platinpartikel auf der äußeren Oberfläche des Zeolithmaterials entstanden sind und sich das Platin in hochdisperser Form überwiegend in dem Zeolithmaterial befindet.

### Aktivitätstest 2:

Der gemäß Beispiel 3 sowie die gemäß der Vergleichsbeispiele 2 und 3 hergestellten Katalysatoren wurden einer Umsetzung von Propan als Aktivitätstest unter den nachstehenden Testbedingungen unterworfen.

### Testbedingungen:

| | |
|---|---|
| Partikelgröße: | 0,5-1,25 mm |
| Temperaturprofil: | Raumtemperatur (RT) → 550 °C |
| Aufheizrate: | 10 °C/min |
| CO-Konzentration: | 800 ppm |
| Propan-Konzentration: | 200 ppm |
| Gasraumgeschwindigkeit (GHSV): | 100 000 h⁻¹ |
| Einwaage: | 7 g |
| Katalysator-Volumen: | 14 ml |

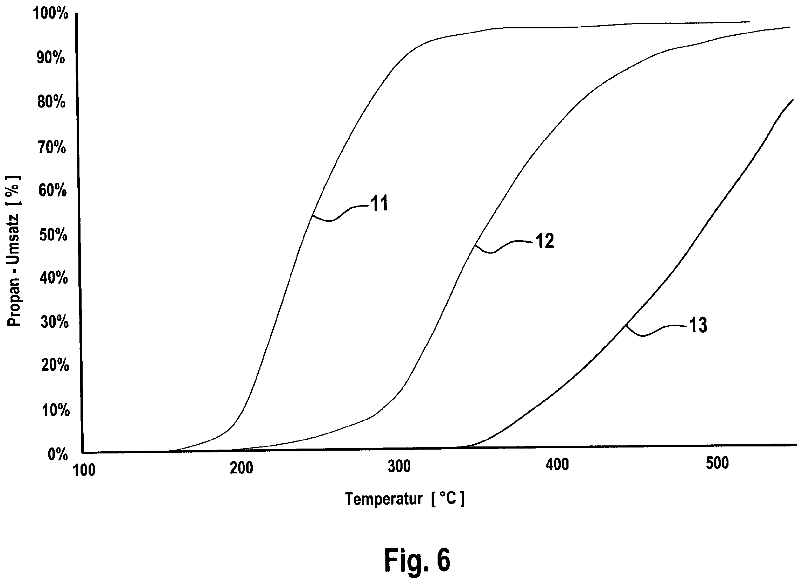

Figur 6 zeigt die Kurvenverläufe der gemessenen Propan-Umsätze in der Aufheizphase in Abhängigkeit von der Temperatur, wobei der Kurvenverlauf des Katalysators gemäß Beispiel 3 sowie die gemäß der Vergleichsbeispiele 2 und 3 mit den Bezugszeichen 11, 13 bzw. 12 belegt sind. Der Aktivitätstest zeigt deutlich die erhöhte Aktivität des mittels des erfindungsgemäßen Verfahrens hergestellten erfindungsgemäßen Katalysators.

Die LO-Temperaturen, bei welcher 50 % des eingesetzten Propans umgesetzt wird, betragen für den gemäß Beispiel 3 hergestellten Katalysator 243 °C und für die gemäß der Vergleichsbeispiele 2 und 3 hergestellten Katalysatoren 498 °C bzw. 356 °C.

## Patentansprüche

1. Verfahren, umfassend die Schritte:
a) Imprägnieren eines offenporigen Trägermaterials mit Platinsulfitsäure;
b) Kalzinieren des imprägnierten Trägermaterials unter einem Schutzgas.

2. Verfahren nach Anspruch 1, **dadurch gekennzeichnet, dass** das Verfahren ferner den Schritt umfasst:
Überführen der Platinkomponente der kalzinierten Platinsulfitsäure in die Oxidationsstufe 0.

3. Verfahren nach Anspruch 2, **dadurch gekennzeichnet, dass** das Überführen der Platinkomponente der kalzinierten Platinsulfitsäure in die Oxidationsstufe 0 bei einer Temperatur von zumindest 100 °C erfolgt.

4. Verfahren nach Anspruch 2 oder 3, **dadurch gekennzeichnet, dass** das Überführen der Platinkomponente der kalzinierten Platinsulfitsäure in die Oxidationsstufe 0 mittels Wasserstoff erfolgt.

5. Verfahren nach einem der Ansprüche 2 bis 4, **dadurch gekennzeichnet, dass** die Schritte des Kalzinierens des imprägnierten Trägermaterials unter Schutzgas und des Überführens der Platinkomponente der kalzinierten Platinsulfitsäure in die Oxidationsstufe 0 mehrmals durchgeführt werden.

6. Verfahren nach einem der voranstehenden Ansprüche, **dadurch gekennzeichnet, dass** das Imprägnieren mittels der Incipient-Wetness-Methode erfolgt.

7. Verfahren nach einem der voranstehenden Ansprüche, **dadurch gekennzeichnet, dass** das Trägermaterial ein anorganisches Trägermaterial ist, ausgewählt aus der Gruppe bestehend aus Titanoxid; γ-, θ- oder Δ- Aluminiumoxid; Ceroxid; Siliziumoxid; Zinkoxid; Magnesiumoxid; Aluminium-Siliziumoxid; Siliziumcarbid und Magnesiumsilikat, eine Mischung von zwei oder mehr der vorgenannten Materialien oder ein mikroporöses oder mesoporöses Zeolithmaterial.

8. Verfahren nach Anspruch 7, **dadurch gekennzeichnet, dass** das Zeolithmaterial ein Zeolithmaterial vom Strukturtyp Beta oder aus der MCM-Familie ist.

9. Verfahren nach Anspruch 7 oder 8, **dadurch gekennzeichnet, dass** das Zeolithmaterial ein Aluminiumsilikat oder ein Titansilikat ist.

10. Verfahren nach einem der voranstehenden Ansprüche, **dadurch gekennzeichnet, dass** zwischen Schritt a) und Schritt b) ein Trocknungsschritt erfolgt.

11. Verfahren nach einem der voranstehenden Ansprüche, **dadurch gekennzeichnet, dass** das Kalzinieren bei einer Temperatur von zumindest 750 °C erfolgt.

12. Katalysator-Vorstufe oder Katalysator, erhältlich nach einem Verfahren gemäß einem der Ansprüche 1 bis 11, **dadurch gekennzeichnet, dass** der Katalysator 1 bis 10 Gew.-% Platin, bezogen auf das Gewicht des Platins und des Trägermaterials, umfasst.

13. Katalysator nach Anspruch 12, umfassend Platin der Oxidationsstufe 0, **dadurch gekennzeichnet, dass** das XRD-Spektrum des Katalysators frei von Signalen elementaren Platins ist, und dass der Katalysator 1 bis 10 Gew.-% Platin umfasst.

14. Katalysator nach Anspruch 12 oder 13, **dadurch gekennzeichnet, dass** der Katalysator 1 bis 5 Gew.-% Platin umfasst.

15. Katalysator nach Anspruch 13, **dadurch gekennzeichnet, dass** das Trägermaterial ein Zeolithmaterial vom Strukturtyp Beta ist.

16. Verwendung eines Katalysators nach einem der Ansprüche 12 bis 15 in einem Katalyseprozess, der oberhalb einer Temperatur von 700 °C durchgeführt wird zur Reinigung von Industrie- oder Fahrzeugabgasen.

## Claims

1. Process comprising the steps:
a) impregnation of an open-pored support material with platinum sulphite acid;
b) calcination of the impregnated support material under a protective gas.

2. Process according to Claim 1, **characterized in that** the process further comprises the step:
conversion of the platinum component of the calcined platinum sulphite acid into the oxidation state 0.

3. Process according to Claim 2, **characterized in that** the conversion of the platinum component of the calcined platinum sulphite acid into the oxidation state 0 is carried out at a temperature of at least 100°C.

4. Process according to Claim 2 or 3, **characterized in that** the conversion of the platinum component of the calcined platinum sulphite acid into the oxidation state 0 is carried out by means of hydrogen.

5. Process according to any of Claims 2 to 4, **characterized in that** the steps of calcination of the impregnated support material under protective gas and of conversion of the platinum component of the calcined platinum sulphite acid into the oxidation state 0 are carried out a plurality of times.

6. Process according to any of the preceding claims, **characterized in that** impregnation is carried out by means of the incipient wetness method.

7. Process according to any of the preceding claims, **characterized in that** the support material is an inorganic support material selected from the group consisting of titanium oxide; γ-, θ- or Δ-aluminium oxide; cerium oxide; silicon oxide; zinc oxide; magnesium oxide; aluminium-silicon oxide; silicon carbide and magnesium silicate, a mixture of two or more of the abovementioned materials and a microporous or mesoporous zeolite material.

8. Process according to Claim 7, **characterized in that** the zeolite material is a zeolite material of the structure type beta or from the MCM family.

9. Process according to Claim 7 or 8, **characterized in that** the zeolite material is an aluminium silicate or a titanium silicate.

10. Process according to any of the preceding claims, **characterized in that** a drying step is carried out between step a) and step b).

11. Process according to any of the preceding claims, **characterized in that** calcination is carried out at a temperature of at least 750°C.

12. Catalyst precursor or catalyst obtainable by a process according to any of Claims 1 to 11, **characterized in that** the catalyst comprises from 1 to 10% by weight of platinum, based on the weight of the platinum and of the support material.

13. Catalyst according to Claim 12 comprising platinum in the oxidation state 0, **characterized in that** the XRD spectrum of the catatlyst is free of signals of elemental platinum and **in that** the catalyst comprises from 1 to 10% by weight of platinum.

14. Catalyst according to Claim 12 or 13, **characterized in that** the catalyst comprises from 1 to 5% by weight of platinum.

15. Catalyst according to Claim 13, **characterized in that** the support material is a zeolite material of the structure type beta.

16. Use of a catalyst according to any of Claims 12 to 15 in a catalysis process which is carried out above a temperature of 700°C for purifying exhaust gases from industry or vehicles.

## Revendications

1. Procédé, comprenant les étapes suivantes :
a) l'imprégnation d'un matériau support à pores ouverts avec du sulfite acide de platine ;
b) la calcination du matériau support imprégné sous un gaz protecteur.

2. Procédé selon la revendication 1, **caractérisé en ce que** le procédé comprend en outre l'étape suivante :
le transfert du composant platine du sulfite acide de platine calciné au niveau d'oxydation 0.

3. Procédé selon la revendication 2, **caractérisé en ce que** le transfert du composant platine du sulfite acide de platine calciné au niveau d'oxydation 0 a lieu à une température d'au moins 100 °C.

4. Procédé selon la revendication 2 ou 3, **caractérisé en ce que** le transfert du composant platine du sulfite acide de platine calciné au niveau d'oxydation 0 a lieu au moyen d'hydrogène.

5. Procédé selon l'une quelconque des revendications 2 à 4, **caractérisé en ce que** les étapes de calcination du matériau support imprégné sous un gaz protecteur et de transfert du composant platine du sulfite acide de platine calciné au niveau d'oxydation 0 sont réalisées à plusieurs reprises.

6. Procédé selon l'une quelconque des revendications précédentes, **caractérisé en ce que** l'imprégnation a lieu au moyen de la méthode à humidité naissante.

7. Procédé selon l'une quelconque des revendications précédentes, **caractérisé en ce que** le matériau support est un matériau support inorganique, choisi dans le groupe constitué par l'oxyde de titane ; l'oxyde d'aluminium γ, Θ ou Δ ; l'oxyde de cérium ; l'oxyde de silicium ; l'oxyde de zinc ; l'oxyde de magnésium ; l'oxyde d'aluminium et de silicium ; le carbure de silicium et le silicate de magnésium, un mélange de deux ou plus des matériaux susmentionnés ou un matériau zéolitique microporeux ou mésoporeux.

8. Procédé selon la revendication 7, **caractérisé en ce que** le matériau zéolitique est un matériau zéolitique de type structural bêta ou de la famille MCM.

9. Procédé selon la revendication 7 ou 8, **caractérisé en ce que** le matériau zéolitique est un silicate d'aluminium ou un silicate de titane.

10. Procédé selon l'une quelconque des revendications précédentes, **caractérisé en ce qu'**une étape de séchage a lieu entre l'étape a) et l'étape b).

11. Procédé selon l'une quelconque des revendications précédentes, **caractérisé en ce que** la calcination a lieu à une température d'au moins 750 °C.

12. Précurseur de catalyseur ou catalyseur, pouvant être obtenu par un procédé selon l'une quelconque des revendications 1 à 11, **caractérisé en ce que** le catalyseur comprend 1 à 10 % en poids de platine, par rapport au poids du platine et du matériau support.

13. Catalyseur selon la revendication 12, comprenant du platine de niveau d'oxydation 0, **caractérisé en ce que** le spectre XRD du catalyseur est exempt de signaux de platine élémentaire, et **en ce que** le catalyseur comprend 1 à 10 % en poids de platine.

14. Catalyseur selon la revendication 12 ou 13, **caractérisé en ce que** le catalyseur comprend 1 à 5 % en poids de platine.

15. Catalyseur selon la revendication 13, **caractérisé en ce que** le matériau support est un matériau zéolitique de type structural bêta.

16. Utilisation d'un catalyseur selon l'une quelconque des revendications 12 à 15 dans un procédé de catalyse qui est réalisé au-dessus d'une température de 700 °C pour la purification de gaz d'échappement industriels ou automobiles.
